# EUROPÄISCHE PATENTSCHRIFT

(11) **EP 0 695 906 B1**
(45) Veröffentlichungstag und Bekanntmachung des Hinweises auf die Patenterteilung: **09.02.2000**
(21) Anmeldenummer: 95108244.5
(22) Anmeldetag: 24.05.1995
(51) Int. Cl.: F16L 55/12, F16K 7/10

(54) **Rohrdichtkissen mit Positionseinrichtung**
Pipe sealing pillow with positioning system
Coussin d'étanchéité pour tuyaux avec système de positionnement

(30) Priorität: 04.08.1994 DE 9412304 U
(43) Veröffentlichungstag der Anmeldung: 07.02.1996
(73) Patentinhaber: Manfred Vetter GmbH & Comp., 53909 Zülpich (DE)
(72) Erfinder: Vetter, Manfred, D-53909 Zülpich (DE)
(74) Vertreter: Bauer, Wulf, Dr.

(56) Entgegenhaltungen:
- GB-A- 172 483
- GB-A- 546 633
- GB-A- 589 771

## Beschreibung

Die Erfindung bezieht sich auf ein Rohrdichtkissen, nach dem Oberbegriff des Anspruchs 1. Ein derartiges Rohrdichtkissen mit Positioniereinrichtung ist aus der GB-A-456 633 bekannt. Danach kann das Rohrdichtkissen mittels der Positioniereinrichtung aus einem Zuführrohr in die abzusperrende Leitung bewegt und wieder zurückgeholt werden.

Rohrdichtkissen gibt es in zylindrischer und in rohrförmiger Ausführung. Sie sind ansich bekannt, verwiesen wird auf die US 4,612,961 oder US 3,459,230.

Typischerweise werden derartige Rohrdichtkissen eingesetzt für ein Absperren von Abwasserleitungen. Ist beispielseise in eine Abwasserleitung umweltgefährdendes Material, z. B. Öl oder eine schädliche Chemikalie, gelangt, so muß verhindert werden, daß dieses Material in das weitere Kanalnetz vordringen kann. Soweit wie möglich in Nähe des Einleitungsortes muß die Abwasserleitung versperrt werden. Hierzu werden die Rohrdichtkissen verwendet.

Beim praktischen Einsatz der Rohrdichtkissen stellt sich jedoch das Problem, daß für ein Absperren eine Person vom Straßenniveau bis in die Tiefe der Abwasserleitung steigen muß, um das Rohrdichtkissen in die Abwasserleitung hineinschieben zu können. Diese Tätigkeit erfordert einerseits Zeit, andererseits ist sie nicht ungefährlich, denn möglicherweise sind mit dem umweltgefährdenden, eingeleiteten Material Schadstoffe giftige Dämpfe oder ein giftiger Gasanteil verbunden. Ohne ein Atemschutzgerät kann man bei Unkenntnis des eingeleiteten Stoffes daher nicht verantworten, eine Person in einen Kanalisationsschacht einsteigen zu lassen. Ein Atemschutzgerät erfordert aber weitere Vorbereitung, also wiederum Zeit. Gerade auf ein möglichst rasches Einsetzen eines Rohrdichtkissens kommt es aber in einem Fall mit Umweltbelastung, wie er vorausgesetzt wurde, an.

Hier setzt nun die Erfindung ein. Sie hat es sich zur Aufgabe gemacht, ein Rohrdichtkissen mit Positioniereinrichtung zu schaffen, wodurch es ermöglicht wird, nach Abnehmen eines Kanalisationsdeckels ohne Einsteigen in den Kanalisationsschacht ein Rohrdichtkissen in eine Abwasserleitung einbringen und korrekt positionieren zu können.

Gelöst wird diese Aufgabe durch ein Rohrdichtkissen mit den Merkmalen des Anspruchs 1.

Erfindungsgemäß ist am Rohrdichtkisssen das axiale Kupplungsteil angeordnet, das mit dem Ansatz der Stange zusammenfügbar (kuppelbar) ist. Im zusammengesetzten Zustand kann das Rohrdichtkissen mittels der Handhabe die am anderen Endbereich der Stange angeordnet ist, manipuliert werden, insbesondere in einen vertikalen Kanalisationsschacht abgesenkt und in eine Abwasserleitung, die in diesen Schacht hineinreicht, eingeführt werden. Sobald das Rohrdichtkissen sich in der Abwasserleitung befindet, kann es über den Luftschlauch gefüllt werden, wodurch der stromaufwärts liegende Bereich der Abwasserleitung nunmehr von der sonstigen Kanalisation abgesperrt ist. Dieser Bereich kann nun separat behandelt, beispielsweise entleert werden. Das Rohrdichtkissen kann auch nach dem Anblasen wieder entleert werden und neu positioniert werden, sofern die ursprüngliche Position keine Abdichtung zuläßt oder sonstwie ungüngstig ist. Nach Abschluß der Arbeiten wird das Rohrdichtkissen mittels der Stange wieder entnommen.

Erfindungsgemäß wird erheblich Zeit beim Einsetzen eines Rohrdichtkissens in eine Abwasserleitung eingespart. Nach Abheben eines Kanalisationsdekkels kann innerhalb weniger Sekunden das Rohrdichtkissen positioniert sein, ohne daß es besonderer Schutzbedingungen und -vorkehrungen bedürfte. Ein Feuerwehrtrupp kann auf diese Weise mehrere Kanalisationsdekkel entlang eines Strangs einer Abwasserleitung hochheben, wozu man sich der Stange bedienen kann, und das Rohrdichtkissen an der Stelle anordnen, wo noch praktisch keine umweltgefährdende Materie durchgeflossen ist. Zu diesem Zeitpunkt muß noch nicht feststehen, welches umweltgefährdendes Mittel eingeleitet wurde, da niemand in den Kanalisationsschacht einsteigen muß, um das Kissen zu plazieren. Alle für diesen Einsetzvorgang des Rohrdichtkissens erforderlichen Handhabungen und Tätigkeiten können vielmehr von der normalen Straßenoberfläche aus erfolgen, einschließlich eines erneuten, z. B. tieferen Platzierens des Rohrdichtkissens.

Mittels der Erfindung wird somit wertvolle Zeit in kritischen Momenten, wie sie bei Umweltbelastungen stets auftreten, gespart und es ist ein rasches Handeln möglich.

Die Verbindung zwischen dem Kupplungsteil und dem Ansatz ist derart, daß bei mit der Stange verbundenem Rohrdichtkissen das Rohrdichtkissen im wesentlichen quer zur Hauptrichtung der Stange verläuft und ausschließlich von der Stange getragen wird. Das Rohrdichtkissen ist dabei mit der Stange zugfest verbunden, so daß durch ein Manipulieren der Stange das Rohrdichtkissen sowohl in eine Leitung hineingeschoben als auch aus ihr herangezogen werden kann. Dabei ist ein einfaches Lösen des Ansatzes von dem Kupplungsteil möglich, hierzu bedarf es keiner externen Hilfsmittel, wie z. B. einer Schnur, die vom Bedienenden erfaßt werden muß. Dies bedeutet, daß sich das Rohrdichtkissen auch erst dadurch von der Stange trennen läßt, daß es selbst einen Halt gefunden hat, also sich z. B. in einer Abwasserleitung befindet. Dies wiederum hilft, Fehlbedienungen zu und -positionierungen vermeiden.

Das Kupplungsteil ist vorzugsweise in einem radialen Abstand von der Mittelachse und oberhalb dieser des Rohrdichtkissens angeordnet. Dadurch liegt der Schwerpunkt des Rohrdichtkissens unterhalb des Punktes, an dem die Stange angreift und es wird eine stabile Tragposition erzielt.

Vorzugsweise sind zwei Kupplungsteile vorgesehen. Dies ermöglicht den Einsatz zweier Stangen, falls dies in komplizierten Situationen notwendig ist. Weiterhin ist bei einer Positionierung des Rohrdichtkissens ohne die Stange immer ein Kupplungsteil so ausreichend weit oben, daß das Rohrdichtkissen bei Abschluß eines konkreten Einsatzes mit der Stange entfernt werden kann, ohne in den Kanalisationsschacht einsteigen zu müssen.

Als vorteilhaft hat sich eine drehsichere Verbindung zwischen Kupplungsteil und Vorsprung erwiesen. Dadurch wird eine bessere und für den Bedienenden einfach zu handhabende Verbindung zwischen Stange und Rohrdichtkissen erzielt. Bei einer nichtdrehsicheren Verbindung der beiden Kupplungsstücke ist es möglich, daß das Rohrdichtkissen sich relativ zur Stange bewegt, z. B. dreht. Dadurch wird zwar erreicht, daß das Kupplungsteil sich immer oben befindet, eine unmittelbare Verbindung zwischen Stange und Rohrdichtkissen ist aber nicht gegeben. Eine nicht drehsichere Verbindung ist erfindungsgemäß allerdings nicht ausgeschlossen.

Als besonders bevorzugt hat sich eine Ausführung erwiesen, bei der das Kupplungsteil ein Stück Flachmaterial ist, das axial von der einen Endfläche des Rohrdichtkissens wegsteht und ein Loch aufweist und bei dem der Ansatz einen in dieses Loch eingreifenden Stift aufweist. In besonders bevorzugter Ausführung ist dieses Flachmaterial Teilstück eines U-förmigen Bügels, der mit seiner Basis auf der Endfläche des Rohrdichtkissens aufliegt und zwei baugleiche, von dieser Endfläche wegstehende Schenkel hat, die jeweils das genannte Flachmaterial ausbilden. Der U-Bügel ist dabei vorzugsweise dadurch mit der Endfläche verbunden, daß seine Basis ein Loch hat, die über die Zuleitung für den Luftschlauch greift und an dieser gegen die Endfläche verschraubt ist. Bei einer derartigen Ausführung kann die bisherige Konstruktion der Rohrdichtkissen beibehalten werden, der U-Bügel kann nachträglich angebracht werden.

Das Kupplungsteil kann ein Vorsprung sein, der axial von der Endfläche des Rohrdichtkissens wegsteht, er kann aber auch eine Ausnehmung sein, die in gleicher Richtung von der Endfläche in das Rohrdichtkissen hineinragt. Auch ein schräger Verlauf des Kupplungsteils mit einem Winkel von bis zu 20, gegebenenfalls 30° zur Mittelachse des Rohrdichtkissens ist möglich.

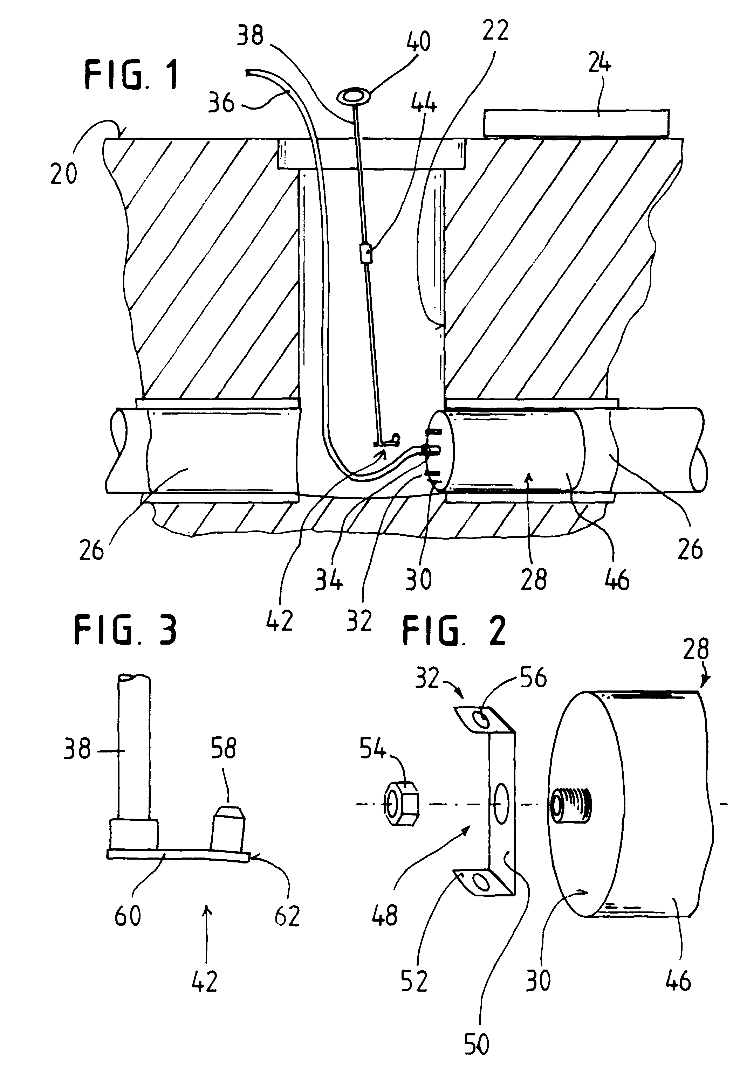

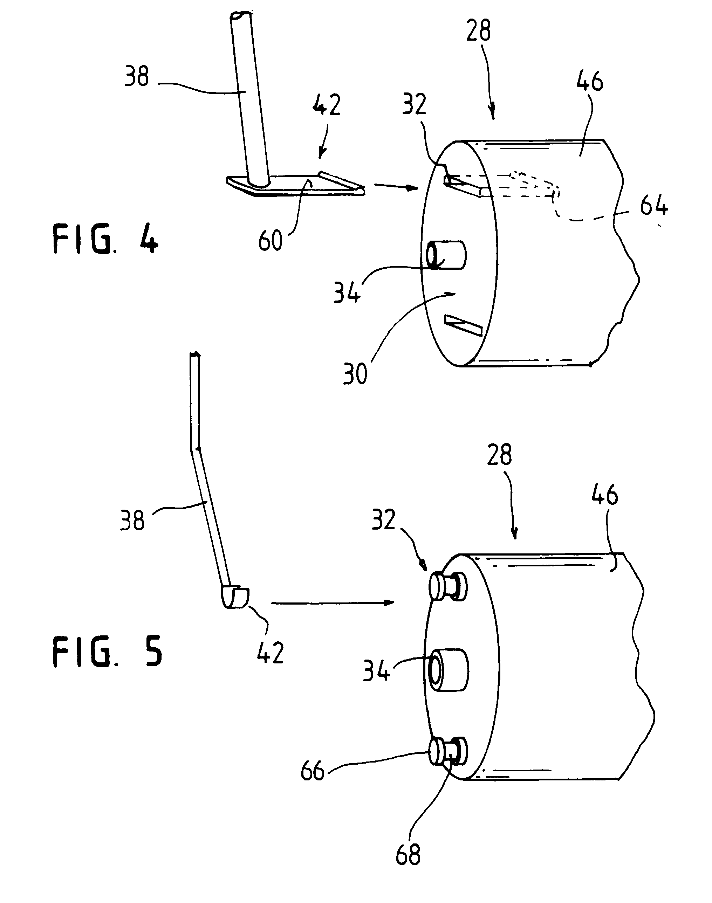

Weitere Merkmale und Vorzüge ergeben sich aus den übrigen Ansprüchen sowie der nun folgenden Beschreibung von drei nicht einschränkend zu verstehenden Ausführungsbeispielen der Erfindung, die unter Bezugnahme auf die Zeichnungen näher erläutert werden. In dieser zeigen:
FIG. 1
   einen Kanalisationsschacht im Schnittbild mit quer davon abgehenden Abwasserleitungen, von denen die rechte durch ein Rohrdichtkissen abgesperrt ist, eine Stange ist dargestellt,
FIG. 2
   ein perspektivisches Montagebild einer Endfläche eines Rohrdichtkissens mit Kupplungsteil und Zuleitung,
FIG. 3
   eine Seitenansicht eines unteren Endbereichs einer Stange mit einem Ansatz für das Kupplungsteil entsprechend FIG. 2,
FIG. 4
   eine Darstellung eines unteren Endbereichs einer Stange und des zugehörigen Endteils eines Rohrdichtkissens in perspektivischer Seitenansicht und
FIG. 5
   eine perspektivische Darstellung der für die Verbindung von Rohrdichtkissen und Positionierenrichtung wesentlichen Teile eines weiteren Ausführungsbeispiels (Darstellung ähnlich FIG. 4).

Ausgehend von einem Straßenniveau 20 zeigt FIG. 1 einen Kanalisationsschacht 22, der üblicherweise durch einen Deckel 24 abgeschlossen ist, welcher sich nun neben der Schachtöffnung auf der Straßenoberfläche befindet. Im Boden des Kanalisationsschachtes 22 münden zwei gleichachsige Abwasserleitungen 26 ein. Die in der FIG. 1 rechte von ihnen ist durch ein Rohrdichtkissen 28 versperrt. Es weist mit seiner linken Endfläche 30 zum Kanalisationsschacht 22, an dieser Endfläche 30 sind einerseits zwei axiale Kupplungsteile 32 und andererseits eine Zuleitung 34 vorgesehen. Mit der Zuleitung ist ein Schlauch 36 verbunden, über den der Innenraum des Rohrdichtkissens 28 gefüllt und entleert werden kann. Die beiden Kupplungsteile 32 sind als Vorsprünge ausgeführt, sie ragen axial von der Endfläche 30 vor. Dem Rohrdichtkissen 28 ist eine Positioniereinrichtung zugeordnet, die eine Stange 38 aufweist. Sie hat eine Handhabe 40 am oberen Endbereich und einen Ansatz 42 am unteren Endbereich. Dieser Ansatz 42 ist mit jedem der beiden Kupplungsteile 32 lösbar verbindbar, sodaß mittels der Stange 38 das Rohrdichtkissen 28 sowohl angehoben und abgesenkt als auch in der Abwasserleitung 26 hin- und her bewegt werden kann. Auf das Zusammenwirken von Ansatz 42 und Kupplungsteil 32 wird bei der Besprechung der übrigen Figuren noch eingegangen.

Wie aus FIG. 1 zu erkennen ist, besteht die Stange 38 aus zwei lösbar miteinander verbindbaren Teilstücken, nämlich einem oberen Teilstück, das die Handhabe 40 umfaßt und einem unteren Teilstück, an dem der Ansatz 42 ausgebildet ist. Beide Teilstücke sind über eine axiale Schraubverbindung miteinander verbunden. Es ist möglich, Verlängerungsstücke im Bereich der Schraubverbindung 44 einzufügen, sodaß die Stange 38 stückweise beliebig verlängert werden kann.

Aus den Figuren 2 und 3 ist ein erstes Ausführungsbeispiel der Ausbildung von Ansatz 42 und Kupplungsteil 32 ersichtlich. Danach ragt die Zuleitung in Form eines Rohrstücks mit Außengewinde axial aus der Endfläche 30 des Rohrdichtkissens 28 hervor. Mit 46 ist der zylindrische Mantel des Rohrdichtkissens 28 bezeichnet. Es ist ein U-förmiger Bügel 48 vorgesehen, der eine Basis 50 und zwei baugleiche Schenkel 52, auch als Flachmaterial bezeichnet, hat. Die Basis 50 hat ein mittiges Durchgangsloch für die Zuleitung 34. Mittels einer Mutter 54 wird im montierten Zustand der U-Bügel 48 an der Endfläche 30 in Anlage gehalten. Die beiden axial vorspringenden Schenkel 52 bilden die Kupplungsteile 32, sie haben ein Loch 56. In dieses kann ein Dorn 58 eingreifen, der von einer Platte 60 am unteren Endbereich der Stange nach oben vorspringt. Dorn 58 und Stange schließen einen spitzen Winkel von etwa 10° ein. Anders ausgedrückt ist die Platte 60, wie FIG. 3 zeigt, leicht abgeknickt. Dorn 58 und Platte 60 bilden zusammen den Ansatz 42.

Beim praktischen Betrieb wird der Dorn 58 von unten in ein Loch 56 eines Schenkels 52 eingeführt, bis die Platte 60 in Anlage an den Schenkel 52 kommt. In diesem Zustand kann mittels der Stange 38 das Rohrdichtkissen 28 gehoben werden. Im gekuppelten Zustand schlägt die Endfläche 62 der Platte 60 an der Außenseite der Basis 50 an, dadurch ist die Kupplung zwischen Ansatz 42 und Kupplungsteil 32 schwenkfest um eine durch den Dorn 58 vorgegebene Schwenkachse.

In einer anderen Ausführung kann man eine gewisse Schwenkbewegung um den Dorn 58 zulassen, indem die Endfläche 62 näher am Dorn 58 angebracht wird und/oder eine leichte Rundung aufweist. In gleicher Weise kann das Loch 56 weiter von der Basis 50 entfernt angeordnet sein.

Im zusammengesteckten Zustand kann mittels der Stange 38 das Rohrdichtkissen 28 in der Abwasserleitung 26 verschoben werden, da der Dorn 58 im wesentlichen quer zur Richtung dieser Verschiebebewegung verläuft. Ein einfaches Ein- und Auskuppeln wird durch Absenken der Stange erreicht. Dieses ist aber erst möglich, wenn das Rohrdichtkissen 28 nicht mehr von der Stange 38 getragen wird, sondern irgendwo aufliegt, beispielsweise sich in der Abwasserleitung 26 befindet.

Die Verbindung zwischen Stange 38 Rohrdichtkissen 28 mittels der beiden Kupplungsstücke, nämlich Ansatz 42 und Kupplungsteil 32, kann solange aufrecht erhalten werden, bis das Rohrdichtkissen 28 seinen korrekten, vollständig abdichtenden Sitz hat. Die Stange 38 stört bei einem Aufblasen und auch beim Entleeren des Rohrdichtkissens 28 nicht.

Im Ausführungsbeispiel nach FIG. 4 sind als Kupplungsteile 32 in der Endfläche 30 des Rohrdichtissens 28 quaderförmige Taschen vorgesehen, die in den Innenraum des Rohrdichtkissen 28 hineinragen. Sie haben eine zum Mantel 46 weisende Erweiterung 64. An der Stange 38 ist als Ansatz 42 wiederum eine Platte 60 vorgesehen, die vorne und oben einen kleinen Wulst aufweist, der mit der Erweiterung 64 so zusammenwirkt, daß eine in Axialrichtung zugfeste Verbindung erzielt wird, wenn das Rohrdichtkissen 28 von der Stange 38 getragen ist. Die Eintrittsöffnung des taschenförmigen Kupplungsteils 32 ist so groß, daß die Platte 60 mit ihrem Wulst eingeführt werden kann. Sobald das Rohrdichtkissen 28 von der Stange 38 getragen wird bzw. im eingesetzten Zustand (FIG. 1) des Rohrdichtkissens 28 die Stange 38 nach oben gezogen wird, kann das Rohrdichtkissen 28 axial bewegt werden.

Ein drittes Ausführungsbeispiel für die Kupplungsstücke, nämlich Ansatz 42 und Kupplungsteil 32, zeigt FIG. 5. Danach springt von der Endfläche 30 ein Stift 66 vor, der eine Verjüngung 68 in seinem Mittelbereich aufweist. Der Ansatz 42 ist eine Halbschale mit der Länge und dem Durchmesser der Verjüngung 48. Diese Halbschale ist einseitig an die abgeknickt ausgebildete Stange 38 angesetzt, sodaß sie eine Art Haken am unteren Ende der Stange 38 bildet. In der Tat kann die Halbschale auch durch zwei gekrümmte Haken ersetzt werden, die im Abstand, wie er durch die Verjüngung 68 vorgegeben ist, angeordnet sind und deren innere Hakenöffnung dem Durchmesser der Verjüngung 68 entspricht.

Im praktischen Betrieb wird die Stange 38 seitlich an den Stift 66 angelegt, wobei die Halbschale sich unterhalb des Stiftes 66 befindet. Wird nun die Stange angehoben, kommt die Halbschale, die den Ansatz 42 bildet, in Eingriff mit der Verjüngung 68, es kommt zur lösbaren Verbindung. Durch Absenken der Stange 38 kann die Verbindung wieder aufgehoben werden, allerdings nur, wenn das Rohrdichtkissen 28 nicht nur von der Stange 38 getragen wird.

Diese letzte Ausführungsbeispiel ermöglicht ein Verschwenken des Rohrdichtkissens 28 um die durch den Stift 66 gebildete Achse. Will man dieses Verschwenken ausschließen, kann man die Verjüngung 68 unrund ausbilden, entsprechend muß auch der schalenförmige Bereich der den Ansatz 42 ausbildet, ausgeführt sein.

## Patentansprüche

1. Rohrdichtkissen mit Positioniereinrichtung, bei dem das Rohrdichtkissen (28) zwei stirnseitige Endflächen (30) und einen Mantel (46) aufweist und an einer der beiden Endflächen (30) eine Zuleitung (34) für einen Luftschlauch (36) angeordnet ist und die Positioniereinrichtung eine Stange (38) aufweist, die an einem Endbereich eine Handhabe (40) und am anderen Endbereich einen Ansatz (42) hat, dadurch gekennzeichnet, daß an der genannten einen Endfläche (30) weiterhin ein axiales Kupplungsteil (32) angeordnet ist und daß der Ansatz (42) mit dem Kupplungsteil (32) lösbar verbindbar ist, sodaß bei mit der Stange (38) verbundenem Rohrdichtkissen (28) dieses im wesentlichen quer zur Hauptrichtung der Stange (38) verläuft und von ihr getragen wird.

2. Rohrdichtkissen nach Anspruch 1, dadurch gekennzeichnet, daß das Kupplungsteil im radialen Abstand von der Mittelachse des Rohrdichtkissens (28) angeordnet ist.

3. Rohrdichtkissen nach Anspruch 1, dadurch gekennzeichnet, daß zwei Kupplungsteile (32) vorgesehen sind.

4. Rohrdichtkissen nach Anspruch 1, dadurch gekennzeichnet, daß das Kupplungsteil (32) ein Vorsprung ist.

5. Rohrdichtkissen nach Anspruch 1, dadurch gekennzeichnet, daß der Eingriff von Kupplungsteil (32) und Ansatz (42) eine drehsichere Verbindung bewirkt.

6. Rohrdichtkissen nach Anspruch 1, dadurch gekennzeichnet, daß der Eingriff zwischen Kupplungsteil (32) und Ansatz (42) eine in Axialrichtung des Rohrdichtkissens (28) zugfeste Verbindung bewirkt.

7. Rohrdichtkissen nach Anspruch 4, dadurch gekennzeichnet, daß das Kupplungsteil (32) ein Loch (56) hat daß der Ansatz (42) einen in dieses Loch (56) eingreifenden Dorn (58) aufweist und daß dieser Dorn (58) einen spitzen Winkel kleiner 15°, vorzugsweise kleiner 10° mit der Hauptrichtung der Stange (38) einschließt.

8. Rohrdichtkissen nach Anspruch 7, dadurch gekennzeichnet, daß der Vorsprung (42) eine quer zur Hauptrichtung der Stange (38) vorspringende Platte (60) aufweist, von der der Dorn (58) aufragt.

9. Rohrdichtkissen nach Anspruch 1, dadurch gekennzeichnet, daß das Kupplungsteil (32) eine Ausnehmung ist, die in der Endfläche (30) taschenartig ausgebildet ist, und daß der Ansatz (42) in diese Ausnehmung einsteckbar ist.

10. Rohrdichtkissen nach Anspruch 1, dadurch gekennzeichnet, daß die Stange (38) aus mindesten zwei lösbar miteinander verbindbaren Teilstücken besteht.

## Claims

1. A pipe sealing pillow with positioning system, with the pipe sealing pillow (28) comprising two end faces (39) on the face and a case (46) and a feeding pipe (34) for an air pipe arranged at one of the two end faces (30) and the positioning system comprising a bar (38), which has a handle (40) on one end area and at the other end area a dog point (42) characterized by the fact - that furthermore an axial coupling half is arranged at the one mentioned end face and that the dog point (42) is connected to the coupling half (32) in a detachable manner in such a way that the pipe sealing pillow, which is connected with the bar (38), essentially runs crosswise to the main direction of the bar (38) and is carried thereby.

2. The pipe sealing pillow according to claim 1 characterized by the fact that the coupling half is arranged in the radial distance from the central axis of the pipe sealing pillow (28).

3. The pipe sealing pillow according to claim 1 characterized by the fact that two coupling halves (32) are provided.

4. The pipe sealing pillow according to claim 1 characterized by the fact that the coupling half (32) is a projection.

5. The pipe sealing pillow according to claim 1 characterized by the fact that the contact of the coupling half (32) and the dog point (42) has the effect of a connection which is secured against turning.

6. The pipe sealing pillow according to claim 1 characterized by the fact that the contact between the coupling half (32) and the dog point (42) has the effect of a tensile connection in the axial direction of the pipe sealing pillow (28).

7. The pipe sealing pillow according to claim 4 characterized by the fact that the coupling half (32) has a hole (56) that the dog point (42) has a mandrel (58) which projects into this hole (56) and that this mandrel (58) includes an acute angle which is smaller than 15°, preferably smaller than 10°, with the main direction of the bar (38).

8. The pipe sealing pillow according to claim 7 characterized by the fact that the dog point (42) comprises a plate (60), from which the mandrel (58) erects, projecting crosswise to the main direction of the bar (38).

9. The pipe sealing pillow according to claim 1 characterized by the fact that the coupling half (32) is a recess, which is embodied in the end face (30) in a pocket like manner and that the dog point (42) can be mounted into the recess.

10. The pipe sealing pillow according to claim 1 characterized by the fact that the bar (38) consists of two detachable sections at least which can be joined with each other.

## Revendications

1. Coussin d'étanchéité pour tuyaux avec dispositif de positionnement, dans le cas duquel le coussin d'étanchéité (28) pour tuyaux présente deux surfaces terminales (30) sur la face et une enveloppe (46), et une amenée (34) pour un tuyau flexible à l'air (36) est disposée sur l'une des deux surfaces terminales (30) et le dispositif de positionnement présente une barre (38) qui, à une extrémité, présente une manette (40) et, à l'autre extrémité, une rallonge (42), caractérisé par le fait que sur l'une des deux surfaces terminales (30), déjà mentionnée est disposée en sus une pièce axiale d'accouplement (32) et que ladite rallonge (42) peut être reliée de manière amovible avec la pièce d'accouplement (32) de sorte que, lorsque le coussin d'étanchéité (28) pour tuyaux est relié avec la barre (38), celui-ci s'étend pour l'essentiel transversalement à la direction principale de la barre (38) et est porté par celle-ci.

2. Coussin d'étanchéité pour tuyaux selon la revendication 1, caractérisé par le fait que la pièce d'accouplement est disposée à distance radiale de la ligne centrale du coussin d'étanchéité pour tuyaux (28).

3. Coussin d'étanchéité pour tuyaux selon la revendication 1, caractérisé par le fait que l'on prévoit deux pièces d'accouplement (32).

4. Coussin d'étanchéité pour tuyaux selon la revendication 1, caractérisé par le fait que la pièce d'accouplement (32) est une projection.

5. Coussin d'étanchéité pour tuyaux selon la revendication 1, caractérisé par le fait que le contact entre la pièce d'accouplement (32) et la rallonge (42) provoque une jonction assurée contre une rotation.

6. Coussin d'étanchéité pour tuyaux selon la revendication 1, caractérisé par le fait que le contact entre la pièce d'accouplement (32) et la rallonge (42) provoque une jonction résistante à la traction dans la direction axiale du coussin d'étanchéité pour tuyaux (28).

7. Coussin d'étanchéité pour tuyaux selon la revendication 4, caractérisé par le fait que la pièce d'accouplement (32) présente un trou (56), que la rallonge (42) possède un mandrin (58) qui se prend dans ce trou (56) et que ce mandrin (58) inclut un angle aigu qui est plus petit que 15°, de préférence plus petit que 10°, avec la direction principale de la barre (38).

8. Coussin d'étanchéité pour tuyaux selon la revendication 7, caractérisé par le fait que la projection (42) présente une plaque (60) qui avance transversalement à la direction principale de la barre (38) et de laquelle s'élève le mandrin (58).

9. Coussin d'étanchéité pour tuyaux selon la revendication 1, caractérisé par le fait que la pièce d'accouplement (32) est un évidement qui est réalisé comme une poche dans la surface terminale (30) et que la rallonge (42) peut être introduite dans cet évidement.

10. Coussin d'étanchéité pour tuyaux selon la revendication 1, caractérisé par le fait que la barre (38) se compose de deux parties du moins qui peuvent être reliées entre elles de manière amovible.
